# EUROPEAN PATENT SPECIFICATION

(11) **EP 1 449 286 B1**
(45) Date of publication and mention of the grant of the patent: **06.07.2005**
(21) Application number: 02786432.1
(22) Date of filing: 17.10.2002
(51) Int. Cl.: H02G 15/18

(54) **TEARABLE CORE MEMBER AND COLD-SHRINK TUBE DEVICE HAVING THE SAME**
ZERREISSBARES KERNELEMENT UND EIN SOLCHES AUFWEISENDE KALTSCHRUMPFROHRVORRICHTUNG
ELEMENT CENTRAL DECHIRABLE ET DISPOSITIF DE TUBE RETRACTABLE A FROID LE COMPORTANT

(30) Priority: 28.11.2001 JP 2001363014
(43) Date of publication of application: 25.08.2004
(73) Proprietor: 3M Innovative Properties Company, St. Paul, MN 55133-3427 (US)
(72) Inventor: SUZUKI, Shigeru, Sagamihara-city, Kanagawa 229-1185 (JP); INOUE, Mitsuharu, Sagamihara-city, Kanagawa 229-1185 (JP)
(74) Representative: Hilleringmann, Jochen, Dipl.-Ing.
(86) International application number: PCT/US2002/033229
(87) International publication number: WO 2003/047062

(56) References cited:
- EP-A- 0 424 090
- EP-A- 0 638 977
- WO-A-95/29524
- JP-U- 7 002 692
- PATENT ABSTRACTS OF JAPAN vol. 1998, no. 06, 30 April 1998 (1998-04-30) & JP 10 042447 A (SUMITOMO 3M LTD;TOKYO ELECTRIC POWER CO INC:THE), 13 February 1998 (1998-02-13)

## Description

### DETAILED DESCRIPTION OF THE INVENTION

### Technical Field of the Invention

The present invention relates to a tearable core member. Further, the present invention relates to a cold-shrink tube device comprising such a tearable core member.

### Prior Art

A cold-shrink tube device comprising an elastic tubular member having an open end and a hollow tubular core member removably provided in an area having a predetermined length from the open end within the elastic tube member to hold this area in an elastically expanded state has been used in various fields as a covering device for quickly attaching to an object. For example, a cold-shrink type cover tube has been known e.g. from JP-A-3-143217 and JP-A-7-57798, which covers an electric wire exposed in a connected portion between cables (or covered electric wires) or between the cable and a terminal member of other conductor for the purpose of moisture-proof, electrical insulation and mechanical protection. An elastomer tube having a length exceeding the entire length of the connected portion is held in advance in an elastically expanded state by a hollow tubular plastic core, which core member is removed when the elastomer tubular member is applied to the connected portion so that the expanded area elastically shrinks.

A core member according to the preamble of claim 1 and a cold-shrink tube device according to the preamble of claim 8 are disclosed in JP-A-7-57 798, corresponding to EP-A- 0 638 977.

The core member used in such a kind of cold-shrink tube device generally has a groove or weakened line continuously formed in a spiral shape all over the entire length of a hollow tubular body in the axial direction thereof. This core member is capable of tearing the body into a ribbon shape along the groove while using one axial end of the groove as a tearing-start end. A method for producing the core member is described, wherein a continuous plastic ribbon having a constant width and thickness all over the entire length is spirally wound and adjacent coils are bonded together along the lateral edges thereof by welding or other means so that a cylindrical body is formed having a spiral groove defined by the bonded portion (see, for example, JP-A-10-513337 and WO-A-99/08355).

Another core member has been also known, wherein the hollow tubular body is able to be torn along a cut line or a weakened line continuously formed over the entire length in the axial direction thereof while regularly meandering (see, for example, JP-U-7-2692). This core member is integrally molded with resinous material by an injection molding process.

The conventional core member having the spiral or meandering weakened line of the above-mentioned type is integrally connected at an axial end of the body to the ribbon area formed in the body by the weakened line so that the extension part extending from the body is further provided. When the core member is disposed within the elastic tubular member, the extension part is inserted in advance into the interior of the body to project the distal end of the extension part from outside of the other axial end of the body. The core member is disposed within the elastic tubular member so that the following orientation is made wherein the other axial end of the body and the distal end of the extension part are exposed from the open end of the elastic tubular member.

According to the cold-shrink tube device having the above-mentioned prior art tearable core member, the longer the length of the core member in the axial direction, the longer the time required for removing the core member. Particularly, in the core member having the spiral weakened line, the ribbon-like cutting piece of the body torn by pulling the distal end of the extension part exposed from the open end of the elastic member tends to entangle with the object to be covered while maintaining the spiral shape, during the mounting of the cold-shrink tube device to the object (for example, the electric wire connected portion). In such a case, it is necessary to tear the body while unwinding the entanglement of the ribbon-like cutting piece, resulting in much consumption of time and labor for the removal of the core member.

To avoid such inconvenience, the axial-directional distance between every adjacent coil of the weakened line extending in the spiral manner is widened to enlarge the axial-directional dimension or the widthwise dimension of the ribbon area formed on the body by the weakened line. By doing so, it is possible to mitigate the degree of entanglement of the ribbon-like piece with the objective because the entire length of the ribbon-like piece of the torn body becomes shorter. However, in this case, the extension part inserted into the interior of the body of the core member prior to being mounted to the object is widened in width in accordance with the enlargement of the widthwise dimension of the ribbon-like area. Since it is largely expanded in the interior of the body in the vicinity of the integrally connected portion with the body to narrow the interior space, there is a particular problem in that it is difficult to smoothly insert the object into the cold-shrink tube device. Also, according to the core member made by winding the continuous ribbon in a spiral manner and integrally bonding the respective coils, since the rigidity of the core member increases as the widthwise dimension of the ribbon becomes larger, it is necessary to increase the mechanical strength of the bonded portion for the purpose of maintaining the cylindrical form of the ribbon. As a result, a large force is required for tearing the body, and also there is a risk in that the tearing operation becomes unstable due to the variety of the mechanical strength in the bonded portion.

Contrary to this, in the core member having the weakened line extending in a meandering manner described above, the ribbon-like area formed in the body by the weakened line is extended as it is generally encircled the body about one or two times. Therefore, if the body is torn by pulling the distal end of the extension part outward, the tearing advancing direction is reversed at generally one or two times. Accordingly, when the body is torn by pulling the distal end of the extension part, the tearing advancing direction is reversed around the object generally at one or two times, and as a result, it is expected that the ribbon-shaped cut piece of the body is not of a spiral shape and is removable from the object without being entangled with the objective. According to this arrangement, irrespective of the dimension of the core member, it is possible to tear the body into a ribbon-shape and remove the core member from the elastic tubular member. In this arrangement, however, a stretching force applied to the ribbon-like cut piece when the body is torn is liable to cause the stress concentration in the reverse part of the ribbon-like cut portion. As a result, when the extension part is particularly vigorously stretched, there is a nsk in that the ribbon-like cut piece may be severed at the reverse part. If the ribbon-like cut piece is severed off, it is difficult to remove the core member from the elastic tubular member, whereby the operation must be carried out with great care which consumes much time and labor for the removal of core member.

An object of the present invention is to provide a cold-shrink tube device having a tearable core member capable of not deteriorating the operability for mounting the same to the object to be covered and of quickly and accurately removing the core member from the elastic tubular member.

Another object of the present invention is to provide a tearable core member usable in a cold-shrink tube device wherein a risk is avoidable in that the ribbon-like cut piece of the torn core body is entangled with the objective to which the cold-shrink tube device is mounted or cut during the tearing operation to realize the stable tearing operation.

### Summary of the Invention

The invention provides a core member comprising a hollow tubular body and a weakened line formed to extend spirally and continuously over an entire axial length of the body, the body being able to be torn into a ribbon shape along the weakened line from an end of the weakened line provided as a tearing-start end at one axial end of the body, characterized in that the weakened line comprises a perforated line including a plurality of joint portions and a plurality of penetrating slits arranged alternately, and extends in a spiral with uneven gaps defined between adjacent coils in an axial direction of the body; and that a region of the ribbon shape, defined m a spiral on the body by the weakened line, includes an end ribbon section defined, adjacent to the tearing-start end, between the weakened line and the one axial end of the body, and a major ribbon section having an axial dimension larger than an axial dimension of the end ribbon section.

In one embodiment, the invention provides a core member wherein one of the joint portions is formed at the tearing-start end of the weakened line, and wherein at least the one joint portion, optionally as well as several joint portions near the one joint portion when viewing in an extending direction of the weakened line, has a tearing strength larger than that of remaining joint portions.

In another embodiment, the invention comprises joint portions wherein each of the joint portions of the weakened line includes a pair of outer surfaces mutually crossing in an acute angle at a tearing-start side of each joint portion, and may further comprise an extension part connected integrally with the end ribbon section and extending from the body, a substantially annular tab being integrally formed at a distal end of the extension part, wherein the body, the extension part and the tab are formed as a one-piece article molded from a resinous material.

In a further embodiment, the invention provides a core member comprising an extension part connected integrally with a region of the ribbon shape, defined in a spiral on the body by the weakened line, at the one axial end of the body; and that the extension part includes a width dimension smaller than an axial dimension of the region of the ribbon shape.

The invention further provides a cold-shrink tube device comprising an elastic tube member including an opening end, and a hollow tubular core member removably arranged inside the elastic tube member m a region of a predetermined length from the opening end to hold the region in an elastically expanded condition, characterized in that the core member comprises a core member in accordance with one of the embodiments mentioned above.

### BRIEF DESCRIPTION OF THE DRAWINGS

Fig. 1 - A partially broken front view of a cold-shrink tube device according to one embodiment of the present invention.
Fig. 2 - An enlarged front view illustrating a core member disposed in the cold-shrink device shown in Fig. 1.
Fig. 3 - A perspective view of the core member of Fig. 2 after being molded.
Fig. 4 - A front view (a) and a side view (b) of the core member after being molded.
Fig. 5 - An enlarged sectional view illustrating a structure of a weakened line in the core member of Fig. 2.
Fig. 6 - (a) to (e) illustrate various modifications of a joint portion provided m the weakened line of Fig. 5.
Fig. 7 - A front view of a modification of a core member.
Fig. 8 - A side view of another modification of a core member.
Fig. 9 - A front view of a further modification of a core member.

### Explanation of Reference Numerals

- 10: cold-shrink tube device
- 12: core member
- 14: open end
- 16: elastic tube member
- 16a: central axis
- 18: end region
- 22: body
- 22a: central axis
- 22c: axial end
- 24: weakened line
- 24': extended section
- 24a: tearing-start end
- 24b: tearing-finish end
- 26: end ribbon section
- 28: major ribbon section
- 30: extension part
- 32: tab
- 32a: tab
- 34: joint portion
- 34': joint portion
- 34a: outer surface
- 34b: outer surface
- 36: penetrating slit
- 38, 40: hook

### Detailed Description of the Invention

The preferred embodiments of the present invention will be described in more detail with reference to the attached drawings wherein common reference numerals are used for designating the corresponding components throughout the drawings.

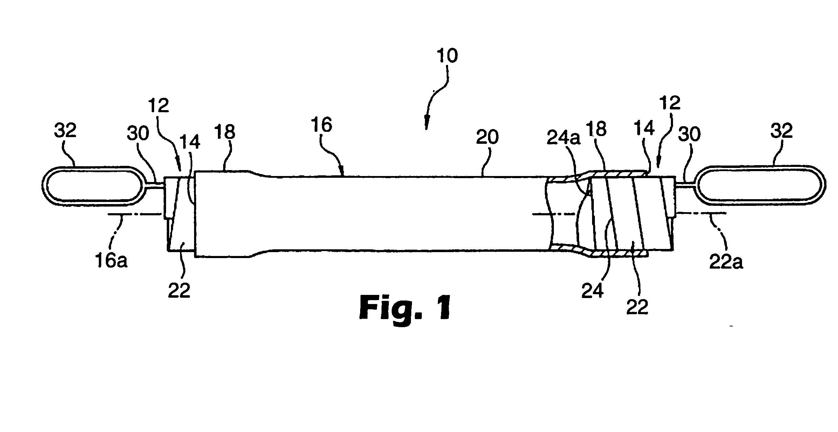

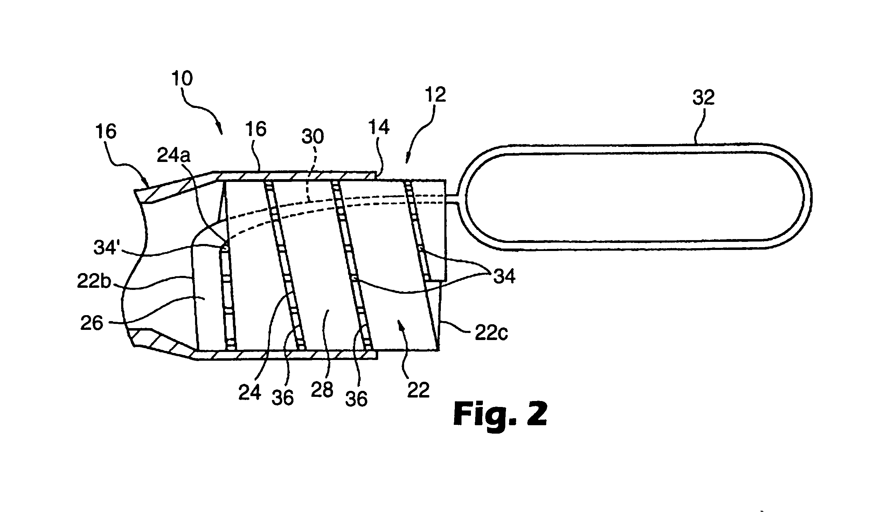

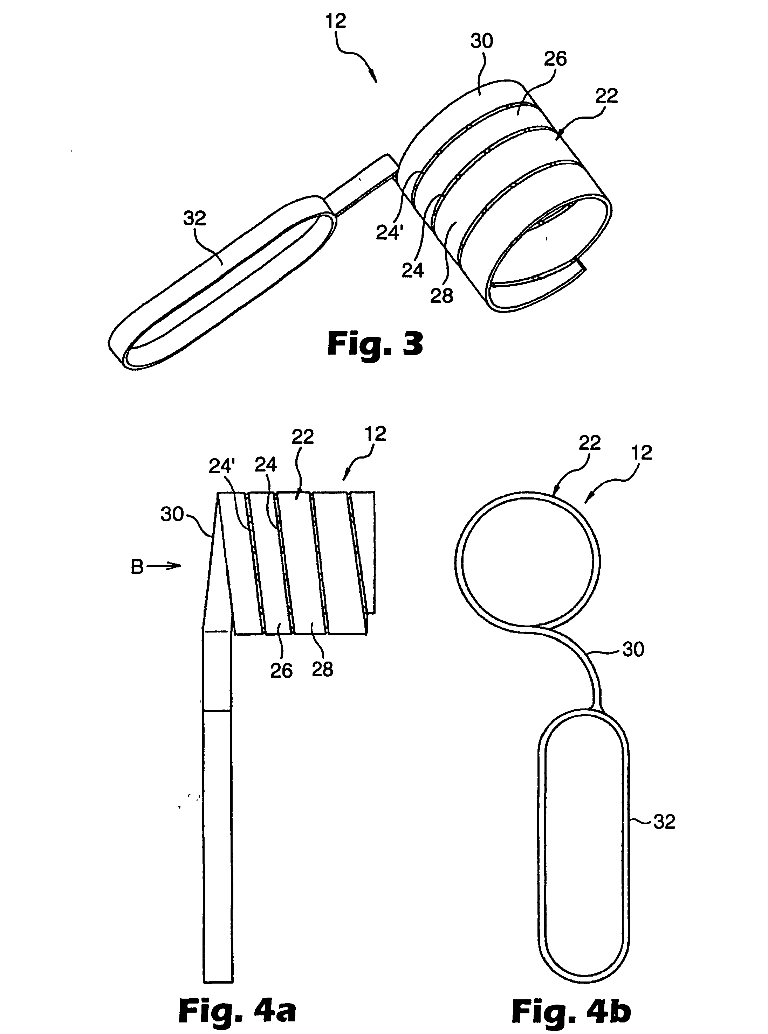

Fig. 1 is a partially sectional front view of a cold-shrink tube device 10 according to one embodiment of the present invention; Fig. 2 is an enlarged front view of a core member 12 according to the one embodiment of the present invention; and Figs. 3 and 4 are views illustrating a state of the core member 12 after being molded. The cold-shrink tube device 10 has a shape of a linear tube having two open ends and can be used as a cold-shrink type covering tube for protecting a linear connected portion of a cable (a covered electric wire), for example. However, the use of the cold-shrink tube device should not be limited thereto.

The cold-shrink tube device 10 includes a hollow cylindrical elastic tube member 16 having open ends at longitudinal opposite ends thereof and a pair of hollow tubular core members 12 removably disposed within end regions 18 of the interior of the elastic tube member 16, each having a predetermined length from the respective open end 14, so that the end region 18 is maintained in an elastically expanded state. The elastic tube member 16 has an intermediate region 20 integrally connected to the opposite end regions 18 in a coaxial manner, wherein an inner diameter of the respective end region 18 in an unloaded state without the core member 12 disposed therein is smaller than an inner diameter of the intermediate region 20 in an unloaded state. Accordingly, when the cold-shrink tube device 10 is mounted to the object (for example, an electric wire connecting portion) while removing the core members 12 therefrom, the opposite end regions 18 of the elastic tube member 16 are brought into tight contact with the outer circumference of the object under the elastic recovery force thereof and the intermediate region 20 covers the aimed portion of the objective.

The elastic tube member 16 is formed of an elastomer inherently having an electric insulation property and flexibility to have the opposite end regions 18 and the intermediate region 20, which regions are preferably integrally made of the same material by an injection molding process. As materials favorably used for the elastic tube member 16 are, for example, ethylene-propylene rubber (particularly EPDM), chloroprene rubber, butyl rubber, silicone rubber, natural rubber, fluororubber and silicone-modified EPDM. Particularly, when the cold-shrink tube device 10 is used as a covering tube for the connected portion of the electric wire, at least opposite end regions 18 of the elastic tube member 16 preferably has an elongation set of 40% or less, more preferably 15% or less, measured in accordance with JIS:K6301 (100°C, 22 hours) (see JP-A-7-57798).

The respective core member 12 includes a hollow tubular cylindrical body 22 and disposed in the end region 18 so that a central axis 22a of the body 22 is aligned with a central axis 16a of the elastic tube member 16. The respective core member 12 has an inner diameter sufficiently larger than an outer diameter of the objective (for example, a connected portion of electric wire) to which the cold-shrink tube device 10 is applied as well as a rigidity capable of maintaining the end region 18 of the elastic tube member 16 in an elastically expanded state having a predetermined diameter against the elastic recovery force thereof. A weakened line 24 continuously extending over the entire axial length of the body 22 in a spiral manner is formed in the respective core member 12. The body 22 can be torn in a ribbon shape along the weakened line 24 from one axial end 22b thereof as a tearing-start end.

The weakened line 24 is formed in the body 22 of the core member 12 so that a distance between every adjacent coils (an axial distance of the body 22) becomes uneven. That is, a ribbon-like region formed in a spiral manner in the body 22 by the weakened line 24 has an end ribbon section 26 defined between the weakened line 24 adjacent to the tearing-start end 24a and the one axial end 22b of the body 22 and a major ribbon section 28 having an axial dimension larger than that of the end ribbon section 26. The major ribbon section 28 is a section mainly maintaining the elastically expanded state of the end region 18 of the elastic tube member 16 among the ribbon-like regions of the body 22. In this definition, a dimension occupied by the major ribbon section 28 relative to all the ribbon-like regions in the body 22 can be determined in correspondence to the axial direction of the end region 18.

In the embodiment illustrated, when the core member 12 is properly arranged in the end region 18 of the elastic tube member 16, the ribbon-like region with about three coils including the end ribbon section 26 and the major ribbon section 28 is accommodated inside the end region 18. In this regard, an axial dimension of the end ribbon section 26 may be approximately 80% of the axial dimension of the major ribbon section 28 or less.

The core member 12 further includes an extension part 30 integrally connected to the end ribbon section 26 and extending from the body 22. At a distal end of the extension part 30, a substantially annular tab 32 is integrally formed. The extension part 30 passes through the inside space of the body 22 and a distal end tab 32 thereof projects outside from the other axial end 22c of the body 22. In this state, the core member 12 is disposed in the end region 18 of the elastic tube member 16 so that the other axial end 22c of the body 22 and the tab 32a of the extension part 30 are exposed from the open ends 14 of the elastic tube member 16.

The core member 12 is integrally molded with resinous material such as hard plastic preferably by an injection molding process. In this case, for the purpose of facilitating the manufacture of mold, as shown in Figs. 3 and 4, the extension part 30 is advantageously formed integrally with the body 22 via an extended section 24' of the weakened line 24 except for a small section adjacent to the distal end tab 32. In the illustrated embodiment, the extension part 30 is molded to have substantially the same widthwise dimension as the axial dimension (that is, a widthwise dimension) of the end ribbon section 26 and a length corresponding to approximately one coil of the ribbon-like region formed in the body 22. And, after the core member 12 has been molded and prior to being disposed inside the end region 18 of the elastic tube member 16, the extension part 30 is torn along the extended section 24' of the weakened line 24 from the end ribbon section 26 of the body 22 and inserted into the inside space of the body 22. In this regard, as materials favorably used for the core member 12 are, for example, cellulose acetate, cellulose butyrate, polypropylene, polyethylene and polyvinyl chloride.

According to the core member 12 of the above structure, it is possible to make the axial dimension (that is, the widthwise dimension) of the major ribbon section 28 in the ribbon-like region formed in the body by the weakened line 24 to be sufficiently larger than that of the end ribbon section 26 by properly adjusting the axial distance between the adjacent coils of the weakened line 24 extending in a spiral manner, while it is possible to reduce the widthwise dimension of the extension part 30 inserted into the inside space of the body 22 in correspondence to the widthwise dimension of the end ribbon section 26. Thus, according to the core member 12, since a total length of the ribbon-like piece torn from the body 22 becomes shorter, it is possible to decrease the degree of entanglement of the ribbon-like piece with the objective. Also, since the inside space of the body 22 can be sufficient due to the reduction of the width of the extension part 30, it is possible to smoothly insert the objective into the cold-shrink tube device 10.

Also, since the body 22 is cylindrical from the first in the core member 12 molded as an integrally molded product, it is unnecessary to increase the mechanical strength of the weakened line 24 even if the widthwise dimension of the major ribbon section 28 increases. In addition, since the weakened line 24 is easily stabilized in structure, it is possible to realize the stable and smooth tearing operation less in variation of the tearing force. Further, since the distal end 32 of the extension part 30 is integrally moldable to have a desired configuration by an injection molding process, it is possible to simplify the manufacturing process.

There may be cases wherein the core member 12 is removed by using a remote handling tool for the purpose of preventing the electric shock from occurring when the cold-shrink tube device 10 having the above-mentioned core member 12 is applied, for example, to the connected portion of the electric wire. In such cases, it is possible to quickly remove the core member 12 from the elastic tube member 16 while avoiding the entanglement of the ribbon-like piece torn from the body 22 around the connected portion of the electric wire by linearly pulling the extension part 30 due to the simple linear motion or rotation of the remote handling tool gripping the tab 30 of the extension part 30 of the core member 12. At this time, since the ribbon-like piece spirally torn from the body 22 has a configuration in which a stress concentration hardly occurs, a risk of severance of the ribbon-like piece becomes smaller even though the extension part 30 is vigorously pulled.

In the core member 12 formed as an integrally molded product, the weakened line 24 is formed as a perforated line having a plurality of joint portions 34 and a plurality of penetrating slits 36 arranged alternately with each other. According to such a weakened line 24, the tearing force for tearing the body 22 into a ribbon-like piece may be properly adjustable by selecting the dimension and the number of the plurality of joint portions 34. A preferable tearing force for the body 22 is, for example, in a range from approximately 20 Newtons (N) to approximately 40 N (from approximately 2 kgf to approximately 4 kgf).

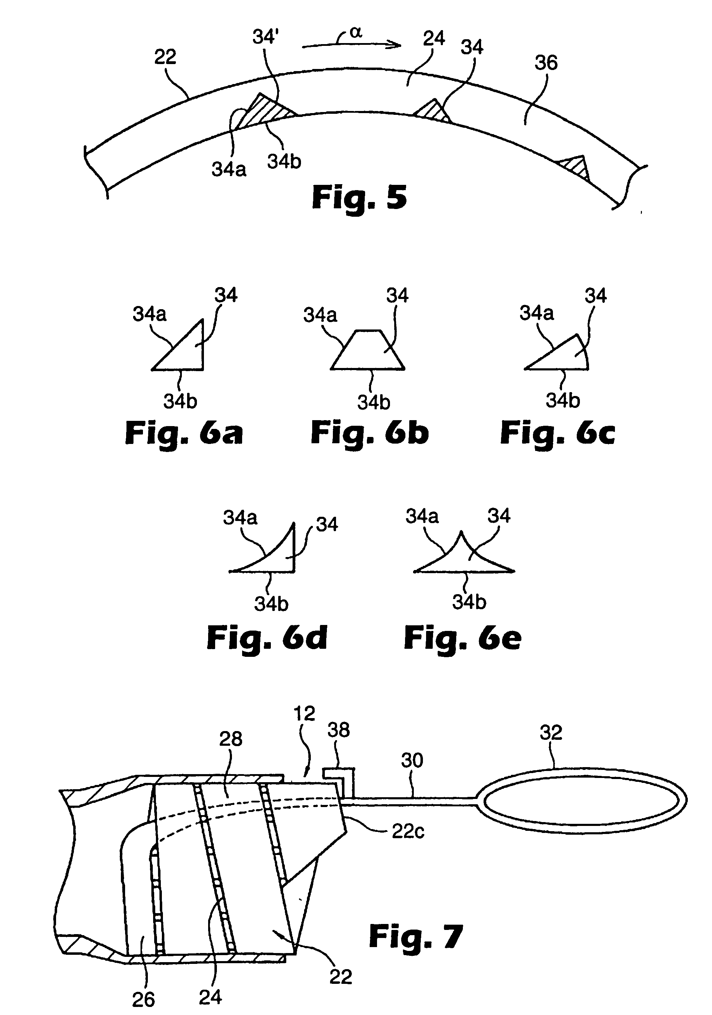

The force necessary for tearing the body 22 of the core member 12 can be adjusted by selecting shapes of the respective joint portions 34 in the weakened line 24. In view of this standpoint, as shown in Fig. 5, the respective joint portion 34 is preferably has a pair of outer surfaces 34a, 34b intersecting at an acute angle each other on the tearing start side (the tearing direction is indicated by an arrow a). The intersecting angle of the outer surfaces 34a, 34b in the respective joint portion 34 may be suitably selected provided the above-mentioned tearing force is obtained; for example, 45 degrees or less. In this regard, the plurality of joint portions 34 in the weakened line 24 preferably have the same dimension and shape because the variation of the tearing force during the tearing operation is suppressed.

According to the cold-shrink tube device 10, in the core member 12 disposed in the end region 18 of the elastic tube member 16, the end ribbon section 26 of the body 22 tends to flex inward in the diametrical direction because it is pressed by a tapered region at a boundary between an expanded area (or an end region 18) and a non-expanded area (or an intermediate region 20). This pressure may cause the breakage of the weakened line 24 at a tearing start end 24a, and there is a risk in that the unintentional breakage of the weakened line 24 increases with time. To avoid such a risk, as shown in Fig. 2, one joint portion 34' is preferably formed at the tearing start end 24a of the weakened line 24 so that this joint portion 34' has a tearing strength higher than the other joint portions 34.

To simply and effectively increase the tearing strength of the joint portion 34' at the tearing-start end 24a of the weakened line 24, the cross-sectional area of the joint portion 34' is preferably larger than that of the other joint portion 34, for example, in Fig. 5. Also, it is possible to increase the tearing strength of the joint portion 34' by making an intersecting angle between the outer surfaces 34a and 34b in the joint portion 34' to be larger than the intersecting angle in the other joint portion 34. To achieve the above-mentioned object, the tearing strength of the joint portion 34' at the teanng-start end 24a of the weakened line 24 is, for example, 1.5 to 2 times the tearing strength of the other joint portion 34 (that is, the tearing force of the body 22), and therefore the shape of the joint portion 34' should be selected to have such a tearing force. Further, if necessary, one or several of the joint portions 34 (preferably 1 to 3) located in the vicinity of the joint portion 34' rearward therefrom as seen in the extending direction; i.e., in the tearing direction of the weakened line 24 may have the tearing strength larger than that of the other joint portion 34 in a similar manner.

Cross-sectional shapes of the respective joint portions 34, 34' are not limited to an equilateral triangle as shown in Fig. 5, but may be selected from various cross-sectional shapes as shown in Figs. 6(a) to 6(e). In either shape, the joint portion 34 has a pair of outer surfaces 34a, 34b intersected at an acute angle on the tearing-start side.

To further smoothly insert the object to be mounted into the cold-shrink tube device 10, the core member 12 preferably has an engagmg mechanism for temporarily anchoring the extension part 30 m the other axial end region of the body 22. This engaging mechanism may be a hook 38 projected outward at an intermediate position in the extension part 30. The hook 38 is preferably integrally molded with the extension part 30. The extension part 30 is held at a position close to the inner surface of the body 22 by detachably engaging the hook 39 with a portion adjacent to the other axial end 22c, whereby a sufficient inside space is guaranteed in the body 22.

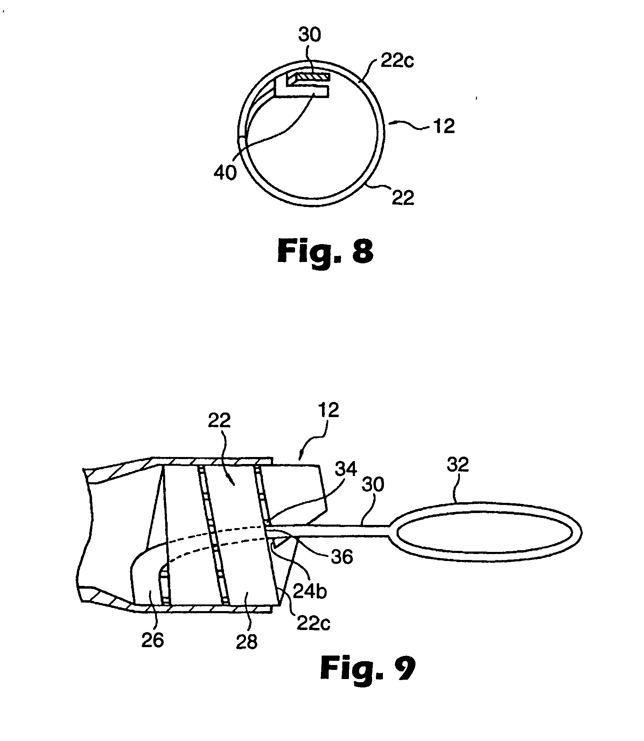

Or, as shown in Fig. 8, a hook 40 engaging mechanism may be integrally projected from a desired position on the inner surface adjacent to the other axial end 22c of the body 22. Also, as shown in Fig. 9, the engaging mechanism may be formed so that no joint portion 34 is provided at a tearing-finish end 24b of the weakened line 24 in the other axial end 22c of the body 22 and the extension part 30 is detachably inserted into the penetrating slit 36 adjacent to the tearing-finish end 24b.

The present invention has been described above with reference to the preferred embodiments. However, the present invention should not be limited thereto but may be variously modified and varied within the definition of the scope of the claims. For example, in the core member of the integrally molded product, the ribbon-like area formed in a spiral form by the weakened line has a uniform axial dimension as a whole, while the extension part integrally connected to the ribbon-like area at one axial end of the body may have a widthwise dimension smaller than that of the axial dimension of the ribbon-like area. It will be understood that the same operation and effect are obtainable as those of the core member 12 described above.

The structure of the core member according to the present invention may be applied to a cold-shrink tube device having a core member over the entire length of an elastic tube member. Of course, the present invention is applicable to a cold-shrink tube device of a bifurcate type. Further, the present invention is applicable to a cold-shrink tube device having a hollow inner layer element of an elastomer different in characteristic fixedly disposed in the end region for the purpose of improving the sealing ability in the end region of the elastic tube member (see JP-A-10-42447).

### Example

The core member 12 shown in Fig. 2 was integrally formed by an injection molding process, so that the axial dimension of the end nbbon region 26 of the body 22 is 7 mm, the axial dimension of the major ribbon region is 10 mm, the axial dimension of the ribbon region between the both gradually increases from 7 mm to 10 mm and the inner diameter of the body 22 is 34.8 mm. A plurality of joint portions 34 in the weakened line 24 were formed so that a cross-sectional area of the joint portion 34' at the tearing-start end 24a is 0.4 mm² and those of the other joint portions 34 are 0.3 mm². According to this arrangement, the tearing force necessary for tearing the body 22 in a ribbon-like piece was approximately 60 N (approximately 6 kgf) at the start of tearing and approximately 40 N (approximately 4 kgf) during the tearing of all the residual portion.

This core member 12 was disposed within the elastic tube member 16 having the end region 18 of approximately 30 mm axial dimension to prepare the cold-shrink tube device 10 shown in Fig. 10. In the operation for mounting this cold-shrink tube device 10 to the electric wire connected portion, the workability of the tearing operation of the core member 12 was studied, by linearly pulling tab 32 of the extension part 30 generally in the axial direction while changing the number of coils in the ribbon-like area of the core member 12 located in the end region. In the experiment, the tearing operation was repeated ten times on the respective number of coils by using the remote handling tool. Results are shown in the following table.

| **Number of coils in the end region of ribbon** | **Workability for tearing core member (number)** | | |
|---|---|---|---|
| | **Easily removed** | **Slightly entangled** | **Impossible to remove** |
| Less than 2.5 | 10 | 0 | 0 |
| 2.5 to 3.0 (less than 3.0) | 6 | 4 | 0 |
| 3.0 to 3.5 (less than 3.5) | 2 | 5 | 3 |
| 3.5 to 4.0 (less than 4.0) | 0 | 3 | 7 |

As shown in the above table, in the cold-shrink tube device 10, it was found that the number of coils in the nbbon-like area of the core member 12 located in the end region 18 of the elastic tube member 16 is preferably less than about three for the purpose of mitigating the entanglement of the core member 12 with the objective.

As apparent from the above description, according to the present invention, in the cold-shrink tube device having a tearable core member, it is possible to quickly and correctly remove the core member from the elastic tube member without deteriorating the mounting workability to the object. Also, there is no risk in that the ribbon-like piece torn from the core member body is entangled with the objective of the cold-shrink tube device or cut during the tearing operation, whereby the stable tearing operation is realized.

## Claims

1. A core member (12) comprising a hollow tubular body (22) and a weakened line (24) formed to extend spirally and continuously over an entire axial length of said body (22), said body (22) being able to be torn into a ribbon shape along said weakened line (24) from an end of said weakened line (24) provided as a tearing-start end (24a) at one axial end (22c) of said body (22), **characterized in that**:
- said weakened line (24) comprises a perforated line including a plurality of joint portions (34) and a plurality of penetrating slits (36) arranged alternately, and extends in a spiral with uneven gaps defined between adjacent coils in an axial direction of said body (22); and that
- a region of said ribbon shape, defined in a spiral on said body (22) by said weakened line (24), includes an end ribbon section (26) defined, adjacent to said tearing-start end (24a), between said weakened line (24) and said one axial end (22c) of said body (22), and a major ribbon section (28) having an axial dimension larger than an axial dimension of said end ribbon section (26).

2. A core member as set forth in claim 1, wherein one of said joint portions (34) is formed at said tearing-start end (24a) of said weakened line (24) having a tearing strength larger than that of remaining joint portions (34).

3. A core member as set forth in claim 2 wherein several joint portions (34) near said one joint portion (34) at said tearing-start end (24a) of said weakened line (24) also have a tear strength larger than that of remaining joint portions.

4. A core member as set forth in claim 1 or 2, wherein each of said joint portions (34) of said weakened line (24) includes a pair of outer surfaces (34a,34b) mutually crossing in an acute angle at a tearing-start side of each joint portion (34).

5. A core member as set forth in any one of claims 1 to 4, further comprising an extension part (30) connected integrally with said end ribbon section (26) and extending from said body (22), a substantially annular tab (32) being integrally formed at a distal end of said extension part (30), wherein said body (22), said extension part (30), and said tab (32) are formed as a one-piece article molded from a resinous material.

6. A core member as set forth in claim 5, further comprising an engaging mechanism (38,40) for temporarily anchoring said extension part on another axial end region (22c) of said body (22).

7. A core member of any one of claims 1 to 6, **characterized in that**:
- said core member (12) comprises an extension part (30) integrally connected with an end region (26) of said ribbon shape, defined in a spiral on said body (22) by an extended section (24') of said weakened line (24), at said one axial end of said body; and that
- said extension part (30) includes a width dimension smaller than an axial dimension of said end region (26) of said ribbon shape.

8. A cold-shrink tube device comprising an elastic tube member (16) including an open end (14), and a hollow tubular core member (12) removably arranged inside said elastic tube member (16) in a region of a predetermined length from said open end (14) to hold said region in an elastically expanded condition, **characterized in that**:
- said core member (12) comprises a core member (12) as set forth in any one of claims 1 to 7.

## Patentansprüche

1. Kernelement (12), das einen hohlen, rohrförmigen Körper (22) und eine Sollbruchlinie (24) aufweist, die so geformt ist, dass sie spiralformig und fortlaufend uber die gesamte axiale Länge des Körpers (22) verlauft, wobei der Körper (22) entlang der Sollbruchlinie (24) von einem Ende der Sollbruchlinie (24) aus, das an einem axialen Ende (22c) des Körpers (22) als Ausgangspunkt für den Reißvorgang (24a) vorgesehen ist, in eine Bandform zerrissen werden kann, **dadurch gekennzeichnet, dass**:
- die Sollbruchlinie (24) eine perforierte Linie mit mehreren alternierend angeordneten Verbindungsabschnitten (34) und Durchgangsschlitzen (36) aufweist, und wendelförmig mit ungleichmäßigen, zwischen benachbarten Windungen in einer axialen Richtung des Korpers (22) definierten Abständen verlauft; und dass
- ein Bereich der Bandform, die durch die Sollbruchlinie (24) als Wendel auf diesem Korper (22) definiert ist, einen Band-Endabschnitt (26), der benachbart zu dem Ausgangspunkt fur den Reißvorgang (24a) zwischen der Sollbruchlinie (24) und dem einen axialen Ende (22c) des Körpers (22) definiert ist, und einen größeren Bandabschnitt (28) mit einer axialen Abmessung aufweist, die größer ist als die axiale Abmessung des Band-Endabschnitts (26).

2. Kernelement nach Anspruch 1, wobei einer der Verbindungsabschnitte (34) am Ausgangspunkt für den Reißvorgang (24a) der Sollbruchlinie (24) gebildet ist und eine Reißfestigkeit besitzt, die größer ist als die der übrigen Anschlussanteile (34).

3. Kernelement nach Anspruch 2, wobei mehrere Verbindungsabschnitte (34) in der Nahe des einen Verbindungsabschnitts (34) an dem Ausgangspunkt für den Reißvorgang (24a) der Sollbruchlinie (24) ebenfalls eine Reißfestigkeit besitzen, die größer ist als die der übrigen Anschlussanteile.

4. Kernelement nach Anspruch 1 oder 2, wobei jeder der Verbindungsabschnitte (34) der Sollbruchlinie (24) ein Paar von Außenflächen (34a, 34b) aufweist, die sich gegenseitig in einem spitzen Winkel an einem Ausgangspunkt für den Reißvorgang jedes Verbindungsabschnitts (34) kreuzen.

5. Kernelement nach einem der Ansprüche 1 bis 4, das des Weiteren ein Verlängerungsteil (30) umfasst, das integral mit dem Band-Endabschnitt (26) verbunden ist und vom Körper (22) weg verläuft, wobei eine im Wesentlichen ringförmige Lasche (32) vorgesehen ist, die integral an einem distalen Ende des Verlängerungsteils (30) geformt ist, wobei der Körper (22), das Verlängerungsteil (30) und die Lasche (32) als einstückiger Formkörper ausgebildet sind, der aus einem harzigen Material geformt ist.

6. Kernelement nach Anspruch 5, das des Weiteren einen Angreifmechanismus (38, 40) fur das vorubergehende Verankern des Verlängerungsteils auf einem anderen axialen Endbereich (22c) des Körpers (22) aufweist.

7. Kernelement nach einem der Ansprüche 1 bis 6, **dadurch gekennzeichnet, dass**:
- das Kernelement (12) ein Verlängerungsteil (30) aufweist, das an dem einen axialen Ende des Körpers integral mit einem Endbereich (26) der Bandform, die durch einen verlängerten Abschnitt (24') der Sollbruchlinie (24) in einer Wendel auf dem Körper (22) definiert ist, verbunden ist; und dass
- das Verlängerungsteil (30) eine Breitenabmessung aufweist, die kleiner ist als eine axiale Abbmessung des Endbereichs (26) der Bandform.

8. Kaltschrumpfrohrvorrichtung, die ein elastisches Rohrteil (16) mit einem offenen Ende (14) und einem hohlen, rohrförmigen Kernelement (12) umfasst, das entnehmbar in dem elastischen Rohrteil (16) in einem um eine vorbestimmte Länge von dem offenen Ende (14) entfernten Bereich angeordnet ist, um den Bereich in einem elastisch verlängerten Zustand zu halten, **dadurch gekennzeichnet, dass**:
- das Kernelement (12) ein Kernelement (12) nach einem der Ansprüche 1 bis 7 aufweist.

## Revendications

1. Elément central (12) comprenant un corps tubulaire creux (22) et une ligne affaiblie (24) formée de façon à se prolonger en spirale et en continu sur toute une longueur axiale dudit corps (22), ledit corps (22) étant capable d'être déchiré suivant une forme en ruban le long de ladite ligne affaiblie (24) à partir d'une extrémité de ladite ligne affaiblie (24) prévue comme une extrémité de départ de déchirure (24a) au niveau d'une extrémité axiale (22c) dudit corps (22),
**caractérisé en ce que** :
- ladite ligne affaiblie (24) comprend une ligne perforée comportant une pluralité de portions de raccord (34) et une pluralité de fentes pénétrantes (36) disposées en alternance, et se prolonge en spirale, des espaces irréguliers étant définis entre des spires adjacentes dans une direction axiale dudit corps (22) ; et **en ce que**
- une région de ladite forme en ruban, définie en spirale sur ledit corps (22) par ladite ligne affaiblie (24), comporte une section de ruban d'extrémité (26) définie, en position adjacente à ladite extrémité de départ de déchirure (24a), entre ladite ligne affaiblie (24) et ladite une extrémité axiale (22c) dudit corps (22), et une section de ruban principale (28) présentant une dimension axiale supérieure à une dimension axiale de ladite section de ruban d'extrémité (26).

2. Elément central selon la revendication 1, dans lequel une desdites portions de raccord (34) est formée au niveau de ladite extrémité de départ de déchirure (24a) de ladite ligne affaiblie (24) et présente une résistance à la déchirure supérieure à celle des portions de raccord (34) restantes.

3. Elément central selon la revendication 2, dans lequel plusieurs portions de raccord (34) proches de ladite une portion de raccord (34) au niveau de ladite extrémité de départ de déchirure (24a) de ladite ligne affaiblie (24) présentent également une résistance à la déchirure supérieure à celle des portions de raccord restantes.

4. Elément central selon la revendication 1 ou 2, dans lequel chacune desdites portions de raccord (34) de ladite ligne affaiblie (24) comporte une paire de surfaces extérieures (34a,34b) se coupant mutuellement selon un angle aigu au niveau d'un côté de départ de déchirure de chaque portion de raccord (34).

5. Elément central selon l'une quelconque des revendications 1 à 4, comprenant en outre une partie en prolongement (30) formée d'un seul tenant avec ladite section de ruban d'extrémité (26) et se prolongeant depuis ledit corps (22), une languette essentiellement annulaire (32) étant formée d'un seul tenant au niveau d'une extrémité distale de ladite partie en prolongement (30), dans lequel ledit corps (22), ladite partie en prolongement (30) et ladite languette (32) prennent la forme d'un article en une seule pièce moulé à partir d'une matière résineuse.

6. Elément central selon la revendication 5, comprenant en outre un mécanisme de prise (38, 40) pour ancrer provisoirement ladite partie en prolongement sur une autre région d'extrémité axiale (22c) dudit corps (22).

7. Elément central selon l'une quelconque des revendications 1 à 6, **caractérisé en ce que** :
- ledit élément central (12) comprend une partie en prolongement (30) formée d'un seul tenant avec une région d'extrémité (26) de ladite forme en ruban, définie en spirale sur ledit corps (22) par une section prolongée (24') de ladite ligne affaiblie (24), au niveau de ladite une extrémité axiale dudit corps ; et **en ce que**
- ladite partie en prolongement (30) comporte une dimension en largeur inférieure à une dimension axiale de ladite région d'extrémité (26) de ladite forme en ruban.

8. Dispositif de tube rétractable à froid, comprenant un élément de tube élastique (16) comportant une extrémité ouverte (14), et un élément central tubulaire creux (12) agencé de façon amovible à l'intérieur dudit élément de tube élastique (16) dans une région d'une longueur prédéterminée depuis ladite extrémité ouverte (14) pour maintenir ladite région dans un état étiré de façon élastique, **caractérisé en ce que** :
- ledit élément central (12) comprend un élément central (12) selon l'une quelconque des revendications 1 à 7.
